Europäisches Patentamt

European Patent Office

Office européen des brevets

(19)

(11) Publication number: **0 324 473**
A2

(12) **EUROPEAN PATENT APPLICATION**

(21) Application number: **89100481.4**

(22) Date of filing: **12.01.89**

(51) Int. Cl.⁴: **B29C 47/00**

(30) Priority: **13.01.88 JP 3882/88**

(43) Date of publication of application:
**19.07.89 Bulletin 89/29**

(84) Designated Contracting States:
**DE GB NL**

(71) Applicant: **Fuji Photo Film Co., Ltd.**
**210 Nakanuma Minamiashigara-shi**
**Kanagawa-ken(JP)**

(72) Inventor: **Hamamura, Ken c/o Fuji Photo Film**
**Co., Ltd.**
**Fujinomiya Works 200 Onakazato**
**Fujinomiya-shi Shizuoka-ken(JP)**
Inventor: **Mochizuki, Shigekatsu c/o Fuji**
**Photo Film Co.,Ltd.**
**Fujinomiya Works 200 Onakazato**
**Fujinomiya-shi Shizuoka-ken(JP)**

(74) Representative: **Patentanwälte Grünecker,**
**Kinkeldey, Stockmair & Partner**
**Maximilianstrasse 58**
**D-8000 München 22(DE)**

(54) **Method for extruding thermoplastic resin.**

(57) Thermoplastic resin is extruded from a die to be molded into a film-like shape in an atmosphere of a gas inactive to the melted resin, thus preventing the adherence of the denaturalized substances of the resin which make scorelines on the surface of a film product of the resin.

**FIG. I**

# METHOD FOR EXTRUDING THERMOPLASTIC RESIN

## BACKGROUND

The present invention relates to a method for extruding a thermoplastic resin, particularly a method for extruding the thermoplastic resin in a film-like shape.

It is well known in the prior art of the process of the molding treatment of a thermoplastic resin that the thermoplastic resin is melted by heating and pressurized in an extruder to be molded by continuous extrusion through a die.

In case of molding the thermoplastic resin, particularly molding a film-like product thereof, undesirable scorelines are produced on a product which have a shape like a paddle of a water bird (hereinafter referred to as die-lip-scorelines) along a flow direction of the resin. The die-lip-scoreline occur on the surface of the molded thermoplastic resin film (hereinafter referred to as a web) due to a flaw or an adhered substance at the end of the die exit (hereinafter referred to as die lips) of the resin. The die-lip-scorelines appear more clearly with the growth of the adherent substance adhered at the end of die lips, whereby the molded web has a remarkably bad appearance.

For this reason, it has been adopted to remove adhered substance from the end of die lips or to prevent the adhesion of the same through addition of an additive agent, such as lead stearate, zinc stearate, palmitic acid, montanic acid, behenic acid, etc. For example, Japanese Patent Kokai Publication No. 58-17433 (or USP 4,442,200) has disclosed that die-lip-scorelines in a melt extrusion coating process are prevented by using a combination of a titanium dioxide pigment coated with di-, tri- or tetra-valent alcohol and a polyolefine having a melt-index (t) of 1.0 - 40 g per 10 minutes. Japanese Patent Kokai Publication No. 60-11841 has disclosed that the adhesion to the die lips and the generation of microgrit in the extrusion molding are prevented by adding ultramaline blue, oxidation inhibitor and stearate to a photographic resin composition consisting substantially of a low-density polyethylene and a titanium dioxide pigment. Further, Japanese Patent Kokai Publication No. 60-75832 (or USP 4,650,747) has disclosed that a master bath for photographic use having little die-lip adhesion is obtained by diluting, with a diluting resin, a resin composition of a high titanium-dioxide content prepared in the presence of an oxidation inhibitor.

## SUMMARY OF THE DISCLOSURE

In order to remove an adhered substance from the end of die lips, the operation is usually interrupted during the cleaning of the die lips. The cleaning is carried out by removing the melted materials adhered to the end of die lips by means of a spatula of light metal (copper or brass) or wood. In this case, the melted resin in the die is usually subjected to flow out as a waste (e.g., not recovered as the product), which involves a loss of melted resin and a loss of time due to the interruption of the operation, resulting in a lower productivity and a higher cost.

Slight scorelines are usually forced to be ignored under the consideration of the time and cost of the cleaning, which fact causes an inferior appearance of the product. This is a considerable drawback in the production process.

In the use of the additive agents, on the other hand, the die-lip-scorelines are not perfectly prevented for the reason that their effect is not perfect. Furthermore they generate smoke which not only provides a worst working environment, but also adheres to the T-die etc. to occasionally fall on the film product and cause a damage to the product. These are considerable drawbacks in the process.

Thus a principal object of the present invention is to provide a method for extruding a thermoplastic resin in which the above described drawbacks are eliminated.

Other objects will become apparent in the entire disclosure.

The above mentioned object is achieved by a method of the present invention in which the leaving point of a melted thermoplastic resin at the end of the die lips is surrounded by a gas inactive to the melted resin (hereinafter referred to as an inactive gas).

The thermoplastic resin which is suitable to the treatment of the method of the present invention is a resin selected from the group consisting of polyethylene, polypropylene, ethylene-$\alpha$-olefine copolymer, ethylene-vinylester copolymer, ethylene-$\alpha$, $\beta$-unsaturated-carboxylic acid copolymer, and metal-neutralized materials thereof, but not limited thereto.

The conception of the present invention will be described hereinbelow.

The causes for the adhesion of the adhered substance to the end of die lips seem to be grouped into the following cases.

(1) The substance comes, as the impurities of the resin, from the upstream of a die or the interior or the die, and adheres to the end of die.

(2) At the end of die lips, the flow of a melted web is stopped or delayed by the die wall, then a certain amount of the melted thermoplastic resin is changed in quality due to a certain reason, looses fluidity and adheres to the end of die lips, and grows thereafter.

Through the investigation by the inventors, the second case has been found dominant. It has been found that the resin is changed in quality, i.e., denaturalized through oxidation, etc. under the atmosphere at the end (outer portion) of the die lips and adheres to the die lips. The present invention discloses a method to prevent such adhesion using the inactive gas.

The present invention provides following advantages.

The cleaning of die lips and the addition of additive agents are not required, since the gas surrounding the point which the resin leaves prevents an adherent substance. Accordingly, there is no requirement for cleaning of the die lips for preventing die-lips-scorelines, thus avoiding the loss of resin caused by flowing as a waste (e.g., not recovered as the product). The smoke accompanied by additives and the defect of the product caused thereby are avoided. The above advantages provide a higher productivity, a less production cost and a better working environment. Further, the method of the present invention does not affect the shape and size of an extruded resin since it is independent of the conditions for determining the shape and size thereof.

## BRIEF DESCRIPTION OF THE DRAWINGS

Fig. 1 is a schematic cross sectional view of an embodiment of an extrusion die for carrying out the method of the present invention.

Figs. 2, 3 and 4 are diagrams respectively showing; a relation between the radius of the lip end corner and the period of time until scoreline occurs; a relation between the die lip clearance and the period of time until scoreline occurs; a relation between the extrusion temperature of a melted thermoplastic resin and the period of time until scoreline occurs.

Fig. 5 is a view showing the radius of a die lip end corner.

## PREFERRED EMBODIMENTS

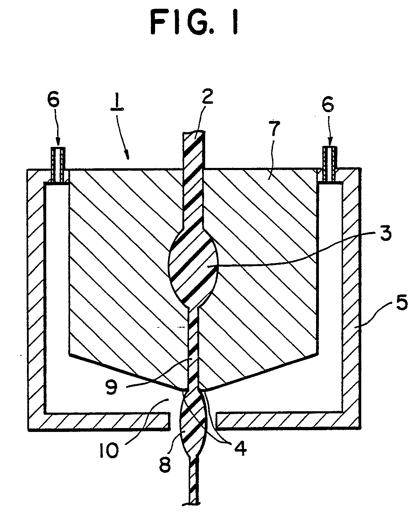

Referring to Fig. 1, the method of the present invention is explained in more detail.

Fig. 1 shows an extrusion die suitable for carrying out the present invention, in which a T-die 1 as the die for extruding a melted thermoplastic resin and an end 4 of the die lips for extruding are shown as well as other portions.

The method of the present invention for extruding a thermoplastic resin resides in that the leaving point of the melted thermoplastic resin at the extruder end 4 of the die 1 for extruding the melted thermoplastic resin is surrounded by an inactive gas which is inactive to the molted resin. A thermoplastic resin kneaded in an extruder (not shown in Fig. 1), e.g., at a temperature of 310 - 335 $^\circ$C is introduced through a resin inlet 2 disposed on a die body 7 into the T-die maintained at a corresponding temperature of 310 - 335 $^\circ$C. The thermoplastic resin then spreads over the entire area (extending also normal to the Figure sheet) of the T-die at a manifold 3, passes between the die lands 9, and is extruded in a shape of a melted web 8 having a high temperature of 305 -320 $^\circ$C from the end 4 of the die lips. The clearance between the die lips varies with the thickness of the web (film) to be produced, though a uniform clearance in the width direction of the web (film) is preferable as a matter of course.

The die 1 is surrounded by a container which is referred to as an enclosing wall 5 hereinafter. A gas inactive to a melted thermoplastic resin is introduced into a space 10 between the die 1 and the enclosing wall 5 from the gas inlets 6. The space 10 is maintained at a higher pressure than the outside of the enclosing wall 5 by continuously introducing the inactive gas from the gas inlets 6. In this case, the applied pressure may be about 0.2 - 0.5 mm $H_2O$.

The point on the end of the die which the melted thermoplastic resin extruded from the extruder leaves is located within the space 10, thus being surrounded by a gas inactive to the melted thermoplastic resin. This inactive gas causes neither a denaturalization (e.g., oxidation) of the melted thermoplastic resin nor the fluidity-deterioration thereof.

Thus the inert gas prevents the adhesion of the denatured materials (e.g., oxides, etc.) to the end of the die lips, and the growth of the adhered materials.

The gas inactive to a specific melted thermoplastic resin should be selected properly through the consideration of the properties of the resin. For ordinary melted thermoplastic resins, there are inactive gases belonging to a rare gas group (inert gas), such as helium, argon, etc.; inactive gas group, such as nitrogen, carbon dioxide, etc.; and mixed gases thereof. In view of cost and safety the nitrogen gas is preferred. Further, the inactive gas of the present invention embraces, for example, a mixed gas which contains gases both inactive and active to a melted thermoplastic resin, provided that the mixed gas has very low ability to denaturalize the melted thermoplastic resin and also it hardly lowers the fluidity of the resin owing to a small amount of the active gas. For example, a mixed gas containing a large amount (at least 90 vol%, preferably at least 95 vol%) of an inactive gas (e.g., nitrogen) and a small amount of the remainder (at most 10 vol%, preferably at most 5 vol%) being oxygen, is available to a melted thermoplastic resin which may be easily oxidized or denaturalized by the presence of the air.

The melted thermoplastic resin intended in the method of the present invention includes, for example, polyethylene, polypropylene, ethylene-$\alpha$-olefine copolymer, ethylene-vinylester copolymer, ethylene-$\alpha$, $\beta$-unsaturated-carboxylic acid copolymer, and metal-neutralized materials thereof.

## EXAMPLES

The present invention will now be further described in more detail with reference to the following examples of the experiments.

### Example 1

As shown in Fig. 1, a T-die was enclosed by an enclosing wall of a glass plate. Nitrogen gas was introduced therein through gas inlets 6, and melted polyethylene was extruded through the T-die. Near the end of the die lips, the oxygen concentration was 1.1 vol%, the flow amount of polyethylene was 21 kg/hr per a die width of 10 cm, and the temperature of polyethylene extruded was 315 °C just beneath the end of the die lips.

In this case, the die-lip-scoreline did not appear in spite of a continuous run of 12 hours.

### Example 2

Melted polyethylene was extruded under the same conditions as in Example 1 except that the introduced amount of nitrogen gas through the gas inlets was smaller than that in Example 1. The oxygen concentration near the end of the die lips was about 5 vol%.

A die-lip-scoreline appeared first after 350 minutes from the start of the extrusion.

### Comparative Example

Melted polyethylene was extruded under the same condition as in Example 1 except that air was introduced through the gas inlets.

A die-lip-scoreline appeared first after 150 minutes.

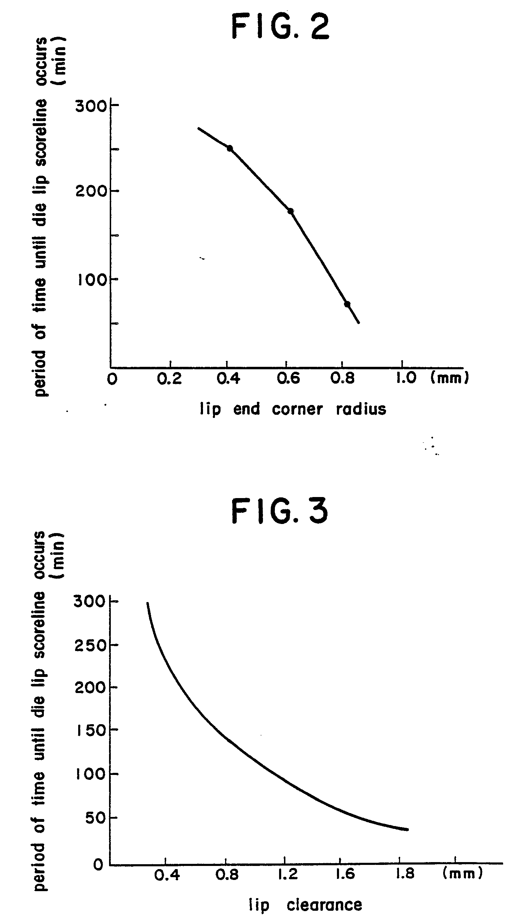

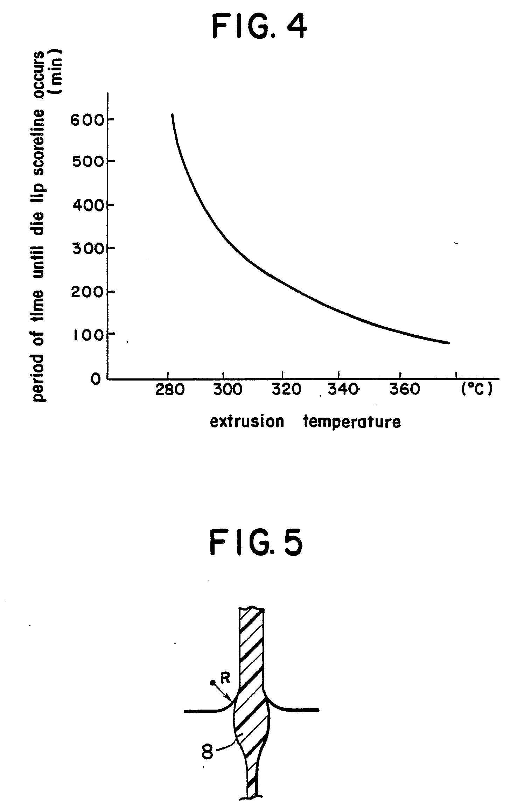

Through the investigation of the inventors the following relations have been found. Figs. 2 - 4 illustrate respectively; Examples of relations between the period of time until a scoreline appears and; (a) radius of the lip end corner of the die; (b) clearance between the die lips; (c) temperature of a melted web just beneath the die lips. As clearly seen from Figs. 2 - 4, it has been found that; (a) a radius of the small lip end corners; (b) a small clearance between the die lips; (c) a lower temperature of a melted web from the die lips; are all effective for preventing the die-lip-scoreline. However, since the changes in these conditions cause other defects, thus such changes are restricted to a certain extent in the practical process. For example, the lower temperature of a melted web extruded from the die provides a web having a different width due to a varied amount of neck-in, the neck-in portion of the web being usually cut off from the extruded web. Besides it is impossible to keep always a small amount of the clearance between the die lips because the thickness of the webs is determined by the clearance.

It should be understood that the modification obvious in the art may be made without departing from the gist and concept of the present invention as herein disclosed and claimed hereinbelow.

## Claims

(1) A method for extruding a thermoplastic resin, characterized in that a leaving point of a melted thermoplastic resin at the end of die lips for extruding said melted resin is surrounded by a gas inactive to said melted resin.

(2) The method according to claim 1, characterized in that said thermoplastic resin is at least one resin selected from the group consisting of polyethylene, polypropylene, ethylene-$\alpha$-olefine copolymer, ethylene-vinylester copolymer, ethylene-$\alpha$, $\beta$-unsaturated-carboxylic acid copolymer, and metal-neutralized materials thereof.

(3) The method according to claim 1, characterized in that said gas is at least one gas selected from the group consisting of rare gases, nitrogen and carbon dioxide.

(4) The method according to claim 3, characterized in that one of said rare gases is selected from the group consisting of helium and argon.

(5) The method according to claim 1, characterized in that said gas is nitrogen.

(6) The method according to claim 1, characterized in that said gas is a mixed gas of gases both inactive and active to the melted thermoplastic resin in such a proportion that said mixed gas has a very low ability of denaturalizing the melted thermoplastic resin.

(7) The method according to claim 6, characterized in that said mixed gas contains at least 90 vol% of an inactive gas and at most 10 vol% of an active gas.

(8) The method according to claim 7, characterized in that said inactive gas is nitrogen and said active gas is oxygen.

# FIG. I

# FIG. 2

period of time until die lip scoreline occurs (min)

lip end corner radius (mm)

# FIG. 3

period of time until die lip scoreline occurs (min)

lip clearance (mm)

# FIG. 4

# FIG. 5